# EUROPEAN PATENT SPECIFICATION

(11) **EP 1 792 748 B1**
(45) Date of publication and mention of the grant of the patent: **07.10.2009**
(21) Application number: 05026089.2
(22) Date of filing: 30.11.2005
(51) Int. Cl.: B60B 7/01, B60B 7/00

(54) **Mechanism for combining an automobile wheel rim and rim cover**
Vorrichtung zum Verbinden von einer Fahrzeugfelge mit einer Radkappe
Mécanisme pour combiner une jante d'une roue d'automobile avec un couvercle de jante

(43) Date of publication of application: 06.06.2007
(73) Proprietor: Kang, Richard, Tainan City (TW)
(72) Inventor: Kang, Richard, Tainan City (TW)
(74) Representative: Casalonga, Axel

(56) References cited:
- EP-A- 1 547 811
- DE-U1- 20 308 808
- FR-A- 2 020 230
- US-A- 2 926 043
- US-A1- 2004 021 367
- US-A1- 2005 134 108

## Description

The present invention relates to mechanisms for combining an automobile wheel rim and a rim cover, more particularly to a mechanism for combining an automobile wheel rim and a rim cover wherein a wheel rim and a rim cover can be connected more stably.

DE 203 08 808 U1 (CHUANG, YA-WEN) describes the preamble of claim 1.

Following the development of the automobile industry, components made of light materials are used extensively. For example, wheel rims made of aluminum alloys have the advantages of light weight, efficient heat conduction and being easy to manufacture. Thereby, wheel rims can be made with the properties of light weight, high heat conduction, high degree of roundedness and diversity in outlook.

However, wheel rims made of aluminum alloys are susceptible to erosion, especially in cold countries where salt is used to harden snow. Since the salt grains are easy to be attached to the wheel rims when the cars are driven on snowy roads, the associated erosion may affect the toughness of a wheel rim.

Accordingly, some manufactures add a rim cover made of stainless steel to protect the wheel rim made of aluminum alloys, whereby the wheel rim has both the advantages of aluminum and stainless steel. However, the conventional means of attaching a rim cover to a wheel rim uses an adhesive means to couple the inner rim of the rim cover to the wheel rim and a buckling means to couple the outer rim of the rim cover to the wheel rim, which has the following disadvantage:
1. high manufacturing cost; the combination of the wheel rim and the rim cover requires an adhesive means and a buckling means, which requires high precision and therefore high cost;
2. complicated manufacturing process wherein the wheel rim is polished before it is combined with the rim cover and, since the rim is basically a thin barrel, the polishing is not easy; it further including a procedure of pressing around the circumference of the wheel rim after the combination, which may damage the polished surface of the wheel rim; and
3. falling apart easily; the adhesive layer applied between the rim cover and the wheel rim being easy to degrade due to high speed rotation and climate changes; it is not only producing noises when the car is running but also causing danger when the rim cover falls from the rim.

Fig. 1 is a lateral cross-sectional view of a wheel rim and a rim cover of the present invention in a separated configuration.
Fig. 2 is a lateral cross-sectional view of a wheel rim and a rim cover of the present invention in an integrated configuration.
Fig. 3 shows the engagement of the wheel rim and the rim cover in Fig. 2.
Fig. 4 is a perspective view of a wheel rim and a rim cover of the present invention in an integrated configuration.
Fig. 5 shows another preferred embodiment of the present invention.

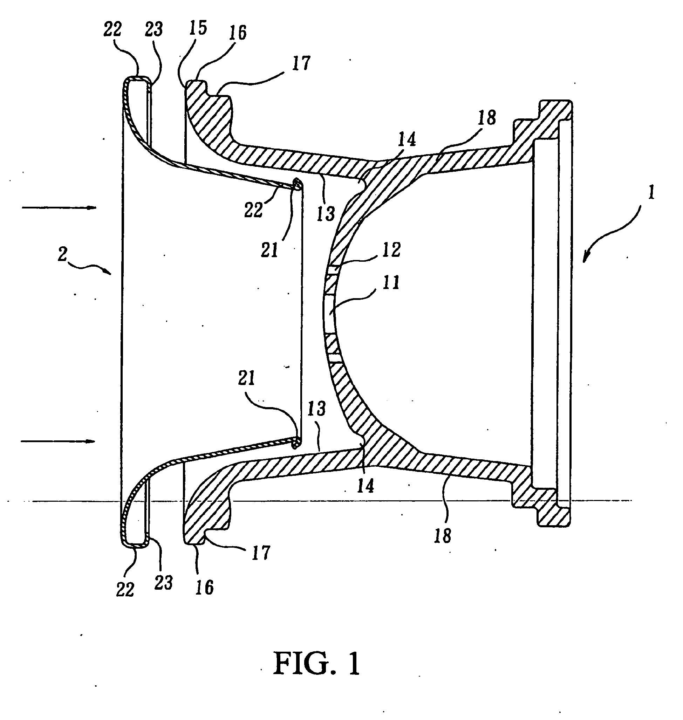

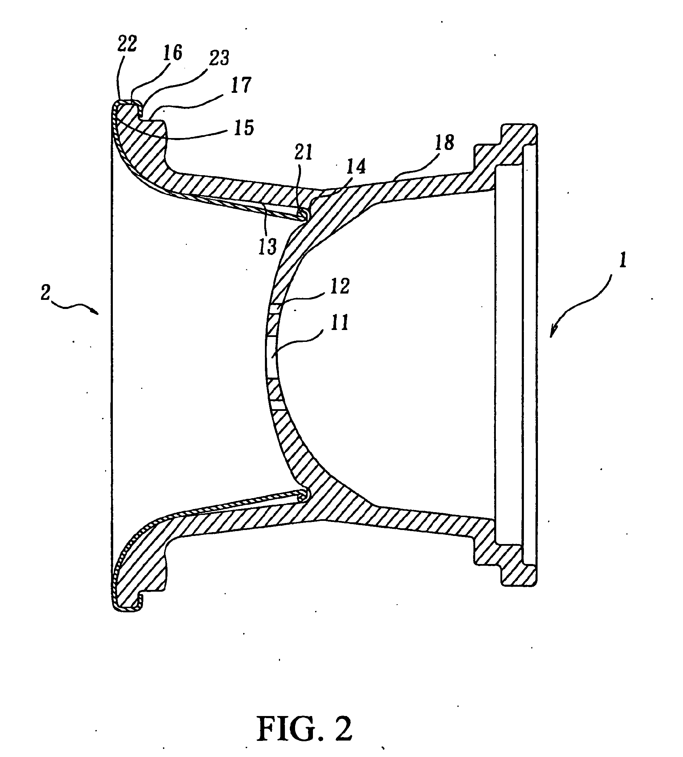

Referring to Figs. 1 and 2, a mechanism for combining an automobile wheel rim and a rim cover according to the present invention comprises a wheel rim 1 made of aluminum and rim cover 2 made of stainless steel or other anti-erosive materials. The wheel rim 1 further includes a wheel center 11 having a plurality of locking holes 12 for locking the wheel rim 1 to a wheel axle. A horn-like inner rim surface 13 is extended from the circumference of the wheel rim 1 outward along the axis of the wheel rim 1. The interface of the inner rim surface 13 and the wheel center 11 forms an inner ring groove 14, and the inner rim of the inner rim surface 13 forms an inner rim boundary 15, whereas the outer part of the inner rim surface 13 forms an outer rim boundary 16. Around the outer rim boundary 16, there is a stepped outer ring groove 17. The horn-like surface between the outer ring groove 17 and the wheel center 11 of the wheel rim 1 defines an outer wall 18.

The shape of the protective rim cover 2 will fit the inner rim surface 13 of the wheel rim 1, wherein a folded inner retaining ring 21 is formed to fit the inner ring groove 14. The inner retaining ring 21 has an arched shape with an opening facing outward. The extended surface of the rim cover 2 further has a retaining outer frame 22 corresponding to the outer rim boundary 16. The rim of retaining outer frame 22 can be folded in the radial direction to form a retaining ring 23.

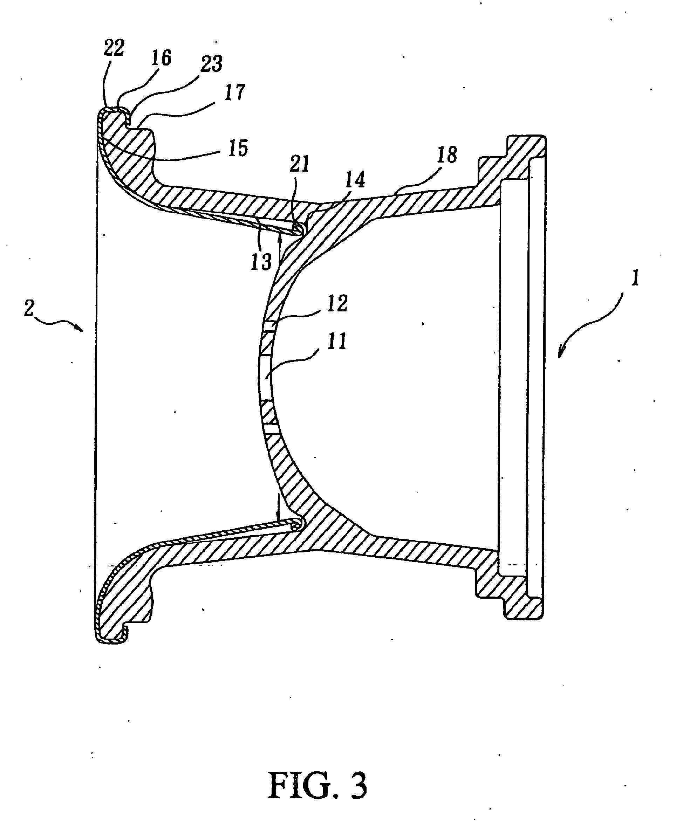

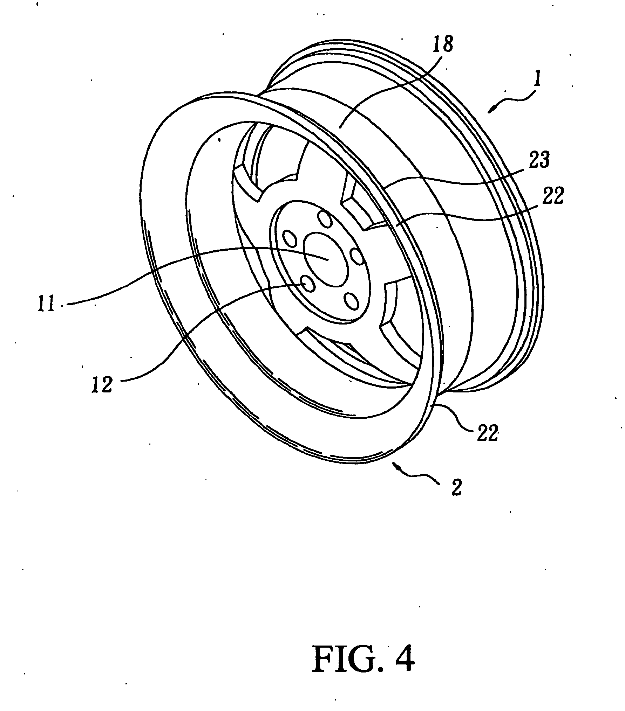

To combine the wheel rim 1 and the rim cover 2, the rim cover 2is firstly inserted into the inner rim surface 13 of the wheel rim 1, whereby the inner retaining ring 21 and the inner ring groove 14 will be coupled. On the other hand, the retaining ring 23 of the rim cover 2 will be engaged with the outer ring groove 17 of the wheel rim 1 , and the retaining outer frame 22 is connected with the outer rim of the wheel rim 1 . Referring to Figs 3 and 4, since the inner retaining ring 21, retaining outer frame 22 and the retaining ring 23 of the rim cover 2 are respectively coupled with the inner ring groove 14 and the outer ring groove 17 of the wheel rim 1, the combined structure will be very stable and the possibility of the rim cover falling off the rim is remote. Because of the protection provided by the rim cover, the inner rim surface 13 of the wheel rim 1 can be protected against erosion. More specifically, the retaining outer frame 22 and the retaining ring 23 of the rim cover 2 are originally flat, and they are folded after the rim cover 2 is engaged with the wheel 1 by a pressing roller, whereby the retaining ring 23 will be hooked on the outer ring groove 17 and the outer rim boundary 16 of the wheel rim 1.

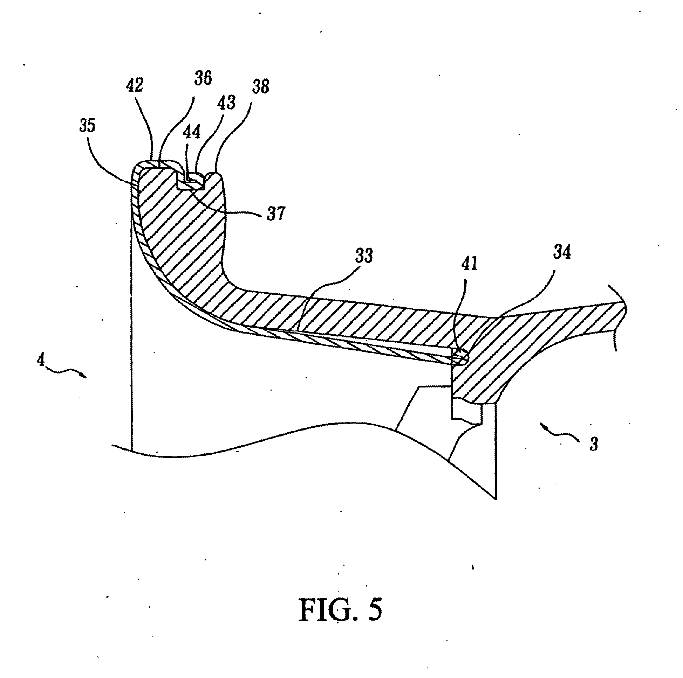

To achieve the same objective, another preferred embodiment of the present invention is illustrated in Fig. 5. Besides the inner rim surface 33, the inner ring groove 34, the inner rim boundary 35, the outer rim boundary 36 and outer ring groove 37, there extends a further stopping flange 38 by the outer ring groove 37. Besides the inner retaining ring 41 and the retaining outer frame 42, there extends an outer retaining ring 43 from the retaining outer frame 42. The outer retaining ring 43 further includes an annular groove 44. Thereby, the inner retaining ring 41 and the outer retaining ring 43 will be respectively engaged with the inner ring groove 34 and the outer ring groove 37, which will be further restricted by the outer rim boundary 36 and the stopping flange 38. The wheel rim 3 and the rim cover 4 are therefore firmly attached.

The present invention is thus described, and it will be obvious that the same may be varied in many ways. Such variations are not to be regarded as a departure from the scope of the present invention, and all such modifications as would be obvious to one skilled in the art are intended to be included within the scope of the following claims.

## Claims

1. A mechanism for combining an automobile wheel rim and a rim cover, comprising:
a wheel rim (1) including a wheel center (11) having a plurality of locking holes (12) for locking said wheel rim to a wheel axle, a horn-like inner rim surface being extended from the circumference of said wheel rim outward along an axis of said wheel rim, an interface of said inner rim surface and said wheel center forms an inner ring groove (14), an inner rim around said inner rim surface (13) forming an inner rim boundary (15), an outer rim around said inner rim surface forming an outer rim boundary (16) and a stepped outer ring groove (17); and
a rim cover (2) with a shape that fits said inner rim surface (13) of said wheel rim, an extended surface of said rim cover further including a retaining outer frame corresponding to said outer rim boundary, said rim of retaining outer frame being capable of being folded in a radial direction to form a retaining ring (23); **characterised by** a folded inner retaining ring (21) being formed to fit said inner ring groove (14), said inner retaining ring having an arched shape with an opening facing outward,
whereby said inner retaining ring (21) of said rim cover will be engaged with said inner ring groove (14) of said wheel rim, and whereby said retaining outer frame (22) and said retaining ring (23) will be engaged with said outer rim boundary (16) and said outer ring groove (17).

2. The mechanism for combining an automobile wheel rim and a rim cover of claim 1, wherein an annular stopping flange (38) is extended out of said outer ring groove (37) of said wheel rim, and an outer retaining ring (43) is extended out of said retaining outer frame of said rim coyer, said outer retaining ring will be strictly restricted by said outer rim boundary and said stopping flange such that said wheel rim and said rim cover will be held together firmly.

3. The mechanism for combining an automobile wheel rim and a rim cover of claim 2 wherein said outer retaining ring (43) has an annular groove (44) for combining said rim cover and said wheel rim more tightly.

## Patentansprüche

1. Vorrichtung zum Verbinden einer Fahrzeugfelge mit einer Radkappe, umfassend:
eine Radfelge (1) mit einem Radzentrum (11), das eine Vielzahl von Befestigungslöchern (12) aufweist, um diese Radfelge an eine Radachse zu befestigen, wobei eine hornartige innere Felgenfläche vom Umfang der Radfelge entlang einer Achse der Radfelge nach außen hin verlängert ist, eine Grenzfläche dieser inneren Felgenfläche und des Radzentrums eine innere Ringnut (14) formt, wobei eine Innenkante um diese innere Felgenfläche (13) herum eine innere Felgengrenze (15) formt, wobei eine Außenkante um die innere Felgenfläche herum eine äußere Felgengrenze (16) und
eine gestufte äußere Ringnut (17) formt; und
eine Radkappe (2) mit einer Form, die an die innere Felgenfläche (13) der Radfelge passt, wobei eine verlängerte Fläche dieser Radkappe außerdem einen äußeren Halterahmen aufweist, der der äußeren Felgengrenze entspricht, wobei dieser äußere Halterahmen der Radkappe in eine radiale Richtung gebogen werden kann, um einen Haltering (23) zu formen; **gekennzeichnet durch**
einen gebogenen inneren Haltering (21), der geformt ist, um in die inneren Ringnut (14) zu passen, wobei dieser innere Haltering eine Bogenform mit einer nach außen gewandten Öffnung aufweist;
wodurch der innere Haltering (21) der Radkappe mit der inneren Ringnut (14) der Radfelge in Eingriff gebracht wird, und wodurch der äußere Halterahmen (22) und der Haltering (23) mit der äußeren Felgengrenze (16) und der äußeren Ringnut (17) in Eingriff gebracht werden.

2. Vorrichtung zum Verbinden einer Fahrzeugfelge mit einer Radkappe nach Anspruch 1, wobei ein ringförmiger Anschlagflansch (38) von der äußeren Ringnut (37) der Radfelge aus verlängert ist und ein äußerer Haltering (43) vom äußeren Halterahmen der Radkappe aus verlängert ist, wobei der äußere Haltering durch die äußere Felgengrenze strikt eingeschränkt wird und der Anschlagflansch derart ist, dass die Radfelge und die Radkappe fest zusammengehalten werden.

3. Vorrichtung zum Verbinden einer Fahrzeugfelge mit einer Radkappe nach Anspruch 2, wobei der äußere Haltering (43) eine Ringnut (44) aufweist, um die Radkappe und die Radfelge fester zu verbinden.

## Revendications

1. Mécanisme d'assemblage d'une jante d'automobile et d'un élément protecteur, comprenant :
une jante (1) comprenant un centre de roue (11) comportant une pluralité de trous de blocage (12) pour bloquer ladite jante sur un axe de roue, une surface intérieure de jante en forme de corne s'étendant depuis la circonférence de ladite jante vers l'extérieur le long d'un axe géométrique de ladite jante, une interface de ladite surface intérieure de jante et dudit centre de roue forme une gorge intérieure (14), un bord intérieur autour de ladite surface intérieure de jante (13) formant une limite de jante intérieure (15), un bord extérieur autour de ladite surface intérieure de jante formant une limite de jante extérieure (16) et une gorge extérieure étagée (17) ; et
un élément protecteur (2) dont la forme est adaptée à celle de ladite surface intérieure de jante (13) de ladite jante, une surface étendue dudit élément protecteur comportant en outre un cadre extérieur de retenue correspondant à ladite limite de jante extérieure, ledit bord de cadre extérieur de retenue pouvant être plié dans une direction radiale pour former un anneau de retenue (23) ;
**caractérisé en ce qu'**un anneau de retenue intérieur plié (21) est formé de manière à se monter dans la gorge intérieure (14), ledit anneau de retenue intérieur ayant une forme arquée avec une ouverture orientée vers l'extérieur, moyennant quoi ledit anneau de retenue intérieur (21) dudit élément protecteur se met en prise dans ladite gorge intérieure (14) de la jante, et ledit cadre extérieur de retenue (22) et ledit anneau de retenue (23) se mettent en prise avec ladite limite de jante extérieure (16) et ladite gorge extérieure (17).

2. Mécanisme d'assemblage d'une jante d'automobile et d'un élément protecteur selon la revendication 1, dans lequel une bride d'arrêt annulaire (38) s'étend hors de ladite gorge extérieure (37) de ladite jante, et un anneau de retenue extérieur (43) s'étend hors dudit cadre extérieur de retenue dudit élément protecteur, ledit anneau de retenue extérieur étant immobilisé par ladite limite de jante extérieure et ladite bride d'arrêt, de sorte que ladite jante et ledit élément protecteur sont assemblés fermement l'un avec l'autre.

3. Mécanisme d'assemblage d'une jante d'automobile et d'un élément protecteur selon la revendication 2, dans lequel ledit anneau de retenue extérieur (43) comporte une rainure annulaire (44) pour assembler de façon plus étroite ledit élément protecteur avec ladite jante.
